# EUROPÄISCHE PATENTANMELDUNG

(11) **EP 3 945 627 A1**
(43) Veröffentlichungstag der Anmeldung: **02.02.2022**
(21) Anmeldenummer: 21186873.2
(22) Anmeldetag: 21.07.2021
(51) Int. Cl.: H01M 50/691, H01M 10/6567, H01M 10/613, B01J 20/26, B01J 20/28

(54) **VERWENDUNG EINES ABSORBERMATERIALS ZUR AUFNAHME UND/ODER VERTEILUNG VON FLÜSSIGKEITEN IN EINEM AKTIV UND/ODER PASSIV GEKÜHLTEN STROMFÜHRENDEN SYSTEM**

(30) Priorität: 27.07.2020 DE 102020119727
(71) Anmelder: Carl Freudenberg KG, 69469 Weinheim (DE)
(72) Erfinder: SCHNEIDER, Ulrich, Dr., 64297 Darmstadt (DE); WEBER, Markus, 69469 Weinheim (DE); SENNE, Sarah, 64658 Fürth (DE)

(57) **Zusammenfassung**

Die Erfindung betrifft die Verwendung eines Absorbermaterials (1), umfassend eine Hülle und in dieser angeordnete superabsorbierende Partikel (3) zur Aufnahme und/oder Verteilung von Flüssigkeiten in einem aktiv und/oder passiv gekühlten stromführenden System, insbesondere in einem aktiv und/oder passiv gekühlten Stromspeichersystem (11), wobei die Hülle (2) aus mindestens zwei flächig aufeinander angeordneten Lagen gebildet ist, wobei die Lagen bereichsweise derart durch mindestens eine Naht (5) miteinander verbunden sind, dass sich eine Segmentierung der Hülle (2) in Form von voneinander abgegrenzten Taschen (4) ergibt und wobei zumindest ein Teil der Taschen (4) die superabsorbierenden Partikel aufweist.

## Beschreibung

Die Erfindung betrifft die Verwendung eines Absorbermaterials zur Aufnahme und/oder Verteilung von Flüssigkeiten in einem aktiv und/oder passiv gekühlten stromführenden System, insbesondere in einem aktiv und/oder passiv gekühlten Stromspeichersystem sowie das stromführende System selbst.

Stromführende Systeme, insbesondere Batteriesysteme, gewinnen zunehmend an Bedeutung, da sie für den Antrieb von Elektro- und Hybridfahrzeugen benötigt werden. Um eine optimale Funktion des Systems zu gewährleisten, ist es notwendig die Temperatur der Batteriezellen in einem gewünschten Temperaturbereich zu halten. Um Überschreitungen und/oder Unterschreitungen der Betriebstemperatur zu verhindern, werden aktive oder passive Temperiersysteme eingesetzt. Besonders bewährt hat sich der Einsatz von flüssigem Temperiermittel mit einer hohen Wärmekapazität, das gut wärmeleitend, in einem Wärmetauscher, an den Batteriezellen entlanggeführt wird.

Darüber hinaus sind die Systeme in der Regel gegenüber der Umgebung nicht hermetisch abgeschlossen. Das heißt, sie lassen einen Gasaustausch mit der Umgebung zu. Um Kontaminations-Eindringung zu verhindern, wird die eintretende Luft gefiltert. Hierzu werden z.B. mikroporöse Folien oder Vliesstoffe eingesetzt.

All diese Ansätze erlauben zwar eine Filterung von Partikeln, nicht jedoch von Gasen und insbesondere auch nicht von Wasserdampf. Wasserdampf kann somit durch die Folien hindurch in das elektronische Gehäuse gelangen. Da das Innere des Gehäuses allerdings gekühlt wird, kann Wasser an kalten Stellen im Gehäuse kondensieren (wenn dessen Taupunkt überschritten wird). Da insbesondere stromführende Teile gekühlt werden, findet die Kondensatbildung dort statt, wo es am kritischsten ist.

Wenn darüber hinaus die Temperatur im Gehäuse selbst immer auf einem niedrigen Niveau liegt, kann das gebildete Kondensat nur schwierig wieder aus dem Gehäuse entfernt werden. Denkbar wären hier z.B. Pumpen, gesteuerte Ventile oder ein Ausheizen. Diese Ansätze sind aufwendig, ggf. fehleranfällig. Ein Ausheizen verbietet sich darüber hinaus bei vielen Applikationen (z.B. Batteriesystemen).

Ein probates Mittel zur Wasseraufnahme stellen Trockenmittel dar, die im oder vor dem Gehäuse angebracht sind, und die Wasser irreversibel binden. Nachteilig hierbei ist allerdings, dass solche Mittel nicht nur flüssiges Wasser aufnehmen, sondern auch Wasserdampf. Sind die Mittel in einem Gehäuse platziert, entfeuchten sie auch den Gasraum im Gehäuse. Dies hat zur Folge, dass somit auch Wasserdampf in das Gehäuse gezogen wird, welcher unter normalen Umständen gar nicht ins Gehäuse gelangt wäre. Somit fungieren solche Trockenpatronen nicht nur als Feuchteaufnehmer sondern auch als Feuchtesauger.

Problematisch ist ferner, dass es, beispielsweise bei einem Unfall eines derart ausgestatteten Fahrzeuges, zu Leckagen und dadurch zum Austreten des Temperiermittels aus dem Kühlkörper kommen kann. Das Temperiermittel kann dann in direkten Kontakt mit den Batteriezellen gelangen und durch seine Leitfähigkeit beispielsweise einen Kurzschluss auslösen.

Ein übliches Trockenmittel ist P₂O₅. Dieses hat zwar eine extrem hohe Aufnahmekapazität gegenüber Wasser, bildet aber bei Aufnahme von Wasser flüssige Phosphorsäure. Diese kann zur Korrosion führen und stellt aufgrund ihrer elektrischen Leitfähigkeit ein Risiko für elektrische Applikationen dar. Zusätzlich ist die Wasseraufnahme irreversibel. Ähnlich reagieren andere typische Trockenmittel wie CaCl₂. Liegen die Trockenmittel lose vor, führt dies zu Staubbildung. Sie sind zudem in feuchtem Zustand elektrisch leitend und können damit zu Kurzschlüssen führen.

Weitere bekannte Flüssigkeits- und insbesondere wasseraufnehmende Substanzen sind z.B. Superabsorber. Vorteilhaft an Superabsorbern ist, dass sie einerseits eine sehr hohe Wasseraufnahmekapazität haben, chemisch neutral reagieren (auch gegenüber organischen Lösemitteln) und außerdem reversibel beladen werden können.

Superabsorber führen mit polaren flüssigen Medien zu einer starken Quellung, und ggf. zu einer Gelbildung. Insbesondere die Quellung kann dazu führen, dass Transportkanäle der Flüssigkeit durch den Quellvorgang blockiert werden (sog. Gel-Blocking Effekt) und eine nachfolgende Aufnahme nicht mehr möglich ist. Darüber hinaus ist eine Quellung in elektronischen Geräten aus zwei weiteren Gesichtspunkten unvorteilhaft bzw. schädlich: Zum einen kann das gequollene Material mechanische Drücke aufbauen, durch welche z.B. elektrische Kontakte getrennt werden können. Zum anderen kann das gequollene Material bei unkontrollierter Quellung elektrische Kurzschlüsse verursachen, wenn es mit stromführenden Teilen in Kontakt kommt.

Eine Schwierigkeit ist die Applikation des Superabsorbers. Eine Möglichkeit besteht in der Verwendung von superabsorbierenden Fasern, wie z. B. in EP2731164 (A1) beschrieben. Gezeigt ist ein Batteriesystem umfassend Batteriezellen, zumindest ein Absorptionselement und ein Temperiersystem mit einem flüssigen Temperiermittel zur Kühlung und/oder Beheizung der Batteriezellen in einem Batteriegehäuse. Das Absorptionselement zur Aufnahme des flüssigen Temperiermittels ist zwischen den Batteriezellen und dem Batteriegehäuse angeordnet, wobei das Absorptionselement ein Vlies ist, wobei das Vlies eine durchschnittliche flächenbezogene Masse von 250 bis 700 g/m² aufweist und Fasern von zumindest zwei unterschiedlichen Fasertypen umfasst, wobei zumindest einer der Fasertypen eine Stützfaser ist und zumindest ein weiterer der Fasertypen eine Absorptionsfaser ist.

Nachteilig an der Verwendung von Absorptionsfasern ist, dass diese in der Regel ein geringeres Absorptionsvermögen haben als vergleichbare absorbierende Partikel. Darüber hinaus besitzen sie in der Regel eine geringere thermische Stabilität im trockenen wie auch im gequollenen Zustand. Darüber hinaus kann die Verwendung von absorbierenden Fasern, wie oben erläutert, zu einem Gelblocking-Effekt führen.

Analog DE 4134370 C1 bietet sich die Verwendung von superabsorbierenden Partikeln, welche auf einem textilen Flächengebilde fixiert werden, an. Nachteilig ist, dass die daraus resultierenden fertigen Absorberpads verhältnismäßig aufwendig im Aufbau sind. So müssen z.B. die puderförmigen superabsorbierenden Partikel zunächst auf einem Vliesstoff fixiert und dann das resultierende Produkt zwecks Unterbindung von Staubbildung mit einer Deckund Trägerschicht versehen werden. Mit der Beschichtung gehen typische produktionstechnische Probleme einher z.B.:
- Mengenbeschränkung der Beschichtung bzw. der hier aktiven Komponente (zu viel Puder -> Material zu dick -> zu steif)
- Haftungsprobleme
- Limitierung bzgl. der Verwendung unterschiedlicher synergistischer Quellkomponenten wie z.B. SAP + Pulp + Guar,
- zu große Komplexität im Fertigungsprozess.
- Hohe Herstellkosten
- Einfluss von produktionstechnisch notwendigen Additiven (Beschichtungshilfsmittel) auf das Absorptionsverhalten.

Aufgabe der Erfindung ist es die vorgenannten Nachteile zumindest teilweise auszuräumen. Insbesondere soll ein Material bereitgestellt werden, das eine gute Wasseraufnahme und Retention hat. Das Material soll ferner in der Lage sein Wasser und ggf. Wasserdampf reversibel zu binden. Darüber hinaus soll es eine kontrollierte Quellbarkeit aufweisen und ein Blocking Effekt vermieden werden können. Schließlich soll es staubarm einsetzbar sein.

Diese Aufgabe wird gelöst durch die Verwendung eines Absorbermaterials, umfassend eine Hülle und in dieser angeordnete superabsorbierende Partikel zur Aufnahme und/oder Verteilung von Flüssigkeiten in einem aktiv und/oder passiv gekühlten stromführenden System, insbesondere in einem aktiv und/oder passiv gekühlten Stromspeichersystem, wobei die Hülle aus mindestens zwei flächig aufeinander angeordneten Lagen gebildet ist, wobei die Lagen bereichsweise derart durch mindestens eine Naht miteinander verbunden sind, dass sich eine Segmentierung der Hülle in Form von voneinander abgegrenzten Taschen ergibt und wobei zumindest ein Teil der Taschen die superabsorbierenden Partikel aufweist.

Erfindungsgemäß wurde gefunden, dass sich das erfindungsgemäße Absorbermaterial hervorragend zur Aufnahme und Verteilung von Flüssigkeiten in aktiv und/oder passiv gekühlten stromführenden Systemen eignet, da durch die Anordnung der superabsorbierenden Partikel in einer segmentierten Hülle ein Gelblocking Effekt im Einsatz verhindert oder zumindest reduziert werden kann. Dies kann darauf zurückgeführt werden, dass die Bildung von Segmenten die Superabsorbermenge unterteilt, was die Größe der maximal möglichen Ansammlung an superabsorbierenden Partikeln an einem Ort reduzieren und damit bei einem möglichen Gelblocking die entstehenden "Klümpchen" verkleinern kann. Darüber hinaus ermöglicht die mindestens eine Naht zwischen den Taschen, einem Transportkanal gleich, während der Flüssigkeitsaufnahme einen Weitertransport der Flüssigkeit ins Innere des Absorbermaterials. Hierdurch kann die Aufnahmekapazität der superabsorbierenden Partikel optimal ausgenutzt werden, was ebenfalls einem Gelblocking entgegenwirken kann. Zusätzlich kann die Segmentierung der superabsorbierenden Partikel die Gefahr der Staubbildung verringern, da bei einer Beschädigung der Hülle lediglich der Teil an Partikeln freigesetzt wird, der im beschädigten Segment enthalten ist. Schließlich ermöglicht es die Segmentierung Superabsorber in Partikelform zu verwenden. Diese haben gegenüber Superabsorber-Fasern den Vorteil, dass sie eine höhere Absorptionskapazität bei vergleichbarer thermischer Stabilität sowohl im getrockneten wie auch im gequollenen Zustand haben.

In einer bevorzugten Ausführungsform ist die mindestens eine Naht als Schweißnaht, insbesondere als thermisch und/oder ultraschall verschweißte Naht, Klebenaht und/oder vernadelte Naht ausgeführt. Vorteilhaft an verschweißten Nähten ist, dass diese besonders schnell und einfach realisiert werden können.

Erfindungsgemäß ergibt sich die Segmentierung der Hülle durch die Ausbildung von durch mindestens eine Naht voneinander abgegrenzten Taschen. Durch die mindestens eine Naht können darüber hinaus die flächig aufeinander angeordneten Lagen miteinander verbunden werden. Vorzugsweise sind die Bereiche der Hülle, die keine Naht aufweisen, nicht und/oder zumindest weniger komprimiert als die Nahtbereiche.

Der Begriff "stromführendes System" wird erfindungsgemäß im herkömmlichen Sinne verwendet, als ein System, durch das elektrischer Strom fließt. Erfindungsgemäß bevorzugte stromführende Systeme sind stromführende Systeme, ausgewählt aus einem Stromspeichersystem, einem stromführenden Energiewandler, einem Transformator, einem Leistungselektroniksystem, einem Steuerungselektroniksystem, insbesondere einem Prozessor gesteuerten System, einer Ladestation, einem Wechselrichter, einem Gleichrichter, einem Elektrolyseur und/oder Kombinationen hiervon.

Der Begriff "Stromspeichersystem" wird erfindungsgemäß im üblichen Sinne verwendet. Insbesondere wird unter einem Stromspeichersystem ein System zur Speicherung von momentan verfügbarer, aber nicht benötigter Energie zur späteren Nutzung verstanden. Diese Speicherung geht häufig mit einer Wandlung der Energieform einher, beispielsweise von elektrischer in chemische Energie. Im Bedarfsfalle wird die Energie dann in die gewünschte elektrische Form zurückgewandelt. Bevorzugte Stromspeichersysteme sind erfindungsgemäß Batteriesysteme, Kondensatoren und/oder Akkumulatoren. Ganz besonders bevorzugt sind Batteriesysteme.

Batteriesysteme sind in Serie oder parallel geschaltete Module, die in Serie oder parallel geschaltete Sekundär- oder Primärzellen enthalten. Akkumulatoren sind in Serie oder parallel geschaltete Module, die in Serie oder parallel geschaltete Sekundärzellen enthalten.

Kondensatoren sind passive elektrische Bauelemente mit der Fähigkeit, in einem Gleichstromkreis elektrische Ladung und die damit zusammenhängende Energie statisch in einem elektrischen Feld zu speichern.

Unter der Aufnahme von Flüssigkeiten ist zu verstehen, dass das Absorbermaterial Flüssigkeiten absorbiert. Hierdurch kann das stromführende System vor der Beschädigung durch die Flüssigkeiten geschützt werden.

Unter der Verteilung von Flüssigkeiten ist zu verstehen, dass das Absorbermaterial Flüssigkeiten in seiner Fläche verteilt. Absorption und Verteilung finden bevorzugt parallel zueinander statt.

Die vom erfindungsgemäßen System aufzunehmenden Flüssigkeiten sind bevorzugt Kühlflüssigkeiten und/oder Wasser, da diese üblicherweise in aktiv oder passiv gekühlten stromführenden Systemen verwendet werden oder auftreten. Bevorzugte Kühlflüssigkeiten sind Alkohole, insbesondere Glycol und/oder Alkohol / Wasser Gemische, insbesondere Glycol / Wasser Gemische.

In einer Ausführungsform der Erfindung ist die vom erfindungsgemäßen System aufzunehmende Flüssigkeit kein Batterieelektrolyt.

Die mindestens eine Naht kann durchgehend oder diskontinuierlich sein. Diskontinuierliche Nähte setzen sich aus unmittelbaren Nahtflächen, d.h. denjenigen Bereichen der Naht, die zur Bindung der beiden Lagen dienen, und mittelbaren Nahtflächen, d.h. denjenigen Bereichen der Naht, die zwischen den unmittelbaren Nahtflächen liegen und nicht zu den Taschen gehören, zusammen. Bei Schweißnähten sind die unmittelbaren Nahtflächen die verschweißten Bereiche, bei vernähten Nähten die durch den Faden bedeckten Bereiche, bei verklebten Nähten, die durch Klebemittel verbundenen Bereiche. Diskontinuierliche Nähte haben den Vorteil, dass sie einen geringeren Anteil an Nahtfläche haben und damit eine höhere Kapillarität und einen besseren Durchfluss der zu absorbierenden Flüssigkeit aufweisen.

Kontinuierliche Nähte haben den Vorteil, dass die Gefahr eines Austretens der superabsorbierenden Partikel reduziert wird. Die mindestens eine Naht kann ferner als gerade oder gebogene Linie oder Kombinationen hiervon ausgebildet sein. Bei einer diskontinuierlichen Ausgestaltung kann die mindestens eine Naht in Form von linienförmig und/oder regelmäßig angeordneten Punkten und/oder Strichen ausgebildet sein. Wie oben erläutert, sind diejenigen Anteile der Naht, die zur Bindung der beiden Lagen dienen, die unmittelbaren Nahtflächen der Naht. Die Breite der mindestens einen Naht beträgt vorzugsweise 0,5 bis 15 mm, noch bevorzugter 0,5 bis 10 mm und besonders bevorzugt 1 bis 6 mm. Weiter bevorzugt beträgt die Nahtfläche, d.h. die Summe an mittelbarer und unmittelbarer Nahtfläche an der Fläche des Absorbermaterials mindestens 0,4 bis 50 Flächen%, bevorzugter 2 bis 40 Flächen% und besonders bevorzugt 4 bis 35 Flächen%. Liegt die Nahtfläche unter 0,4 Flächen% ist die Festigkeit der Naht in der Regel zu gering. Liegt die Nahtfläche oberhalb 50% ist die zur Quellung vorhandene Fläche zu gering.

In einer besonderen Ausführungsform ist die mindestens eine Naht als Schweißnaht ausgebildet, die, vorzugsweise in ihrer Mitte, perforiert ist. Hieran ist vorteilhaft, dass auf eine besonders einfache Weise das Absorbermaterial an die Einbausituation angepasst werden kann. So können beispielsweise Aussparungen gezielt durch Herauslösen von Teilbereichen entlang der perforierten Schweißnaht gebildet werden.

Die Form der Schweißnaht kann variieren. In einer bevorzugten Ausführungsform ist der Übergang zwischen der Schweißnaht und den nicht verschweißten Bereichen der Lagen fließend. Mithin nimmt in einer bevorzugten Ausführungsform die Dicke der verschweißten Bereiche der Schweißnaht in Richtung mindestens einer an die Schweißnaht angrenzenden Tasche, vorzugsweise in Richtung beider an sie angrenzender Taschen zu. Entsprechend nimmt die Dichte der verschweißten Bereiche der Schweißnaht in Richtung mindestens einer Tasche, vorzugsweise in Richtung beider an sie angrenzender Taschen ab. Der Übergang zwischen Schweißnaht und Tasche ist vorzugsweise kontinuierlich. Der Bereich der höchsten Verdichtung liegt vorzugsweise in der Mitte der Schweißnaht. Hierdurch kann sich eine gerundete, insbesondere eine halbrunde Geometrie der Schweißnaht ergeben. Vorteilhaft hieran ist eine höhere Festigkeit der Schweißnaht.

Die Taschengeometrie kann variieren. Bevorzugt weisen die Taschen unabhängig voneinander eine oder mehrere der folgenden Geometrien auf: rechteckig, dreieckig, sechseckig, schuppenförmig, rund, oval und/oder geschwungen. Besonders bevorzugt liegen die Taschen zumindest teilweise in einer rechteckigen Taschengeometrie vor. Diese Geometrie ist deshalb bevorzugt, da sie sich technisch besonders einfach abbilden lässt.

In einer weiteren bevorzugten Ausführungsform liegt die Anzahl der Taschen pro Quadratmeter Absorbermaterial im Bereich von mindestens zwei Taschen pro Quadratmeter, beispielsweise bei 4 bis 400 Taschen pro Quadratmeter, noch bevorzugter bei 8 bis 300 Taschen pro Quadratmeter und insbesondere bei 16 bis 200 Taschen pro Quadratmeter.

Weiterhin bevorzugt beträgt die Menge an superabsobierenden Partikeln mindestens 20 g/m², beispielsweise 20 bis 1000 g/m², bevorzugt 20 bis 800 g/m² und besonders bevorzugt 20 bis 600 g/m², bezogen auf die Fläche des Absorbermaterials.

Weiterhin bevorzugt beträgt die Menge an superabsobierenden Partikeln pro Tasche mindestens 0,5 g pro Tasche, beispielsweise 0,5 g bis 500 g pro Tasche, bevorzugt 20 bis 400 g pro Tasche und insbesondere 20 bis 200 g pro Tasche.

Superabsorber zeichnen sich dadurch aus, dass sie Flüssigkeit hervorragend binden, also eine gute Retention haben, und aufnehmen können. Erfindungsgemäß wird unter einem Superabsorber ein Polymer verstanden, das in der Lage ist, ein Vielfaches seines Eigengewichts - bis zum 500-fachen - an Flüssigkeiten, vorzugsweise Wasser, aufzusaugen bzw. aufzunehmen, wobei es an Volumen zunimmt.

Superabsorber bilden im gequollenen Zustand Hydrogele. Geeignete superabsorbierende Partikel weisen insbesondere vernetzte Polymere auf, die polar sind und insbesondere bestehen sie daraus. Besonders bevorzugt sind Polyacrylamid, Polyvinylpyrrolidon, Amylopektin, Gelatine und/oder Cellulose. Ganz besonders bevorzugt sind Copolymere aus Acrylsäure (Propensäure, H2C=CH-COOH) und/oder Natriumacrylat (Natriumsalz der Acrylsäure, H2C=CH-COONa) einerseits und Acrylamid andererseits. Dabei kann das Verhältnis der beiden Monomere zueinander variieren.

Den vorgenannten Monomeren wird in der Regel ein so genannter Kernvernetzer (Core-Cross-Linker, CXL) zugesetzt, der die gebildeten langkettigen Polymermoleküle stellenweise untereinander durch chemische Brücken verbindet (vernetzt). Durch diese Brücken wird das Polymer wasserunlöslich. Zusätzlich kann ein sogenannter Oberflächen-Nachvernetzer, (Surface-Cross-Linker, SXL) verwendet werden. Dabei wird eine weitere Chemikalie auf die Oberfläche der Partikel aufgebracht, die durch Erwärmung ein zweites Netzwerk nur auf der äußeren Schicht des Korns knüpft. Diese Schicht stützt das aufgequollene Gel, um dieses auch bei äußerer Belastung (Bewegung, Druck) zusammen zu halten.

In einer bevorzugten Ausführungsform weist mindestens eine Tasche zusätzlich zu den superabsorbierenden Partikeln ein Füllmaterial, beispielsweise saugfähige Materialien wie Zellstoffpulp, Fasern, Guar, Kieselgel und/oder Schaum auf. Vorzugsweise liegt das Füllmaterial in einem Gewichtsanteil (Füllmaterial zu Gesamtmenge Füllmaterial plus superabsorbierende Partikel) von mindestens 5 Gew.%, beispielsweise von 5 bis 90 Gew.%, noch bevorzugter von 5 bis 75 Gew.% und insbesondere von 5 bis 50 Gew.% vor.

In einer weiteren bevorzugten Ausführungsform weist mindestens eine Tasche zusätzlich zu den superabsorbierenden Partikeln brandhemmende Substanzen auf, beispielsweise Substanzen, die brandhemmende und/oder brandgasverdünnende Gase freisetzen.

In einer weiteren bevorzugten Ausführungsform weist das Absorbermaterial einen Schallabsorptionsgrad a, gemessen nach DIN EN ISO 10534-1:2001 im Impedanzrohr, von mindestens 0,1 bei 1000 Hz auf, beispielsweise von 0,1 bis 1, bevorzugt von 0,2 bis 1, noch bevorzugter von 0,3 bis 1.

Die Einstellung des Schallabsorptionsgrades kann auf verschiedene dem Fachmann bekannte Weisen erfolgen. Ein hoher Absorptionsgrad kann durch mindestens eine zusätzliche Lage, die vorzugsweise auf den flächig aufeinander angeordneten Lagen angeordnet ist, erzielt werden. Dabei weist die zusätzliche Lage vorzugsweise einen Meltblown Vliesstoff auf.

Mithin weist das erfindungsgemäße Absorbermaterial in einer bevorzugten Ausführungsform mindestens eine zusätzliche Lage auf, die vorzugsweise ein Meltblown Vliesstoff ist. Weiter bevorzugt ist die zusätzliche Lage auf mindestens einer Außenseite der Hülle angeordnet. Ebenfalls denkbar ist, dass die zusätzliche Lage innerhalb der Taschen angeordnet ist. In einer weiteren bevorzugten Ausführungsform weist mindestens eine Tasche akustisch aktive Füllstoffe, wie insbesondere Faserpulp, auf.

In einer weiteren bevorzugten Ausführungsform weist mindestens eine Lage der Hülle ein textiles Flächengebilde auf, beispielsweise einen Vliesstoff, ein Gewebe, ein Gewirke und/oder einen offenporigen Schaum. Vorteilhaft an diesen Materialien ist ihre gute Wasserdurchlässigkeit gepaart mit einer hohen strukturellen Integrität auch im nassen Zustand. Bevorzugte Vliesstoffe sind Spinnvliesstoffe, nass gelegte Vliesstoffe und/oder trocken gelegte Vliesstoffe. Das Flächengewicht beträgt vorzugsweise 10 g/m² bis 500 g/m².

In einer weiteren bevorzugten Ausführungsform ist die Oberflächenenergie des textilen Flächengebildes, gemessen nach DIN 55660-2:2011-12, größer als 30 mN/m, vorzugsweise größer als 35 mN/m und besonders bevorzugt größer als 40 mN/m. Hieran ist vorteilhaft, dass polare Medien wie Wasser oder Wasser/Glycol Mischungen, besonders gut verteilt werden können.

In einer weiteren bevorzugten Ausführungsform beträgt die Luftdurchlässigkeit des textilen Flächengebildes mehr als 10 dm³/(m²s), noch bevorzugter 20 bis 3000 dm³/(m²s), noch bevorzugter 30 bis 2000 dm³/(m²s), insbesondere 30 bis 1000 dm³/(m²s). Dabei wird die Luftdurchlässigkeit gemessen nach DIN EN ISO 9237:1995 bei einem Differenzdruck von 200 Pa. Die Messungen der Luftdurchlässigkeit erfolgen vor der Kontaktaufnahme mit Flüssigkeit mit Proben des textilen Flächengebildes mit einer Dicke von 0,05 bis 10 mm, vorzugsweise 0,1 bis 1 mm, besonders bei einer luftdurchströmten Probenfläche von 20 cm², bei einer Luftdruckdifferenz von 200 Pa.

In einer weiteren bevorzugten Ausführungsform liegt die Luftdurchlässigkeit des Absorbermaterials bei mehr als 10 dm³/(m²s), bevorzugt im Bereich von 20 bis 3000 dm³/(m²s), noch bevorzugter von 30 bis 2000 dm³/(m²s), besonders bevorzugt im Bereich von 30 bis 1000 dm³/(m²s). Dabei wird die Luftdurchlässigkeit gemessen nach DIN EN ISO 9237:1995 bei einem Differenzdruck von 200 Pa. Die Messungen der Luftdurchlässigkeit erfolgen vor der Kontaktaufnahme mit Flüssigkeit mit Proben des textilen Flächengebildes mit einer Dicke von 0,1 bis 15 mm, vorzugsweise 0,25 bis 5 mm, besonders bei einer luftdurchströmten Probenfläche von 20 cm², bei einer Luftdruckdifferenz von 200 Pa.

In einer bevorzugten Ausführungsform der Erfindung weist das textile Flächengebilde eine mittlere Porengröße, gemessen nach ASTM E 1294-89 von mehr als 1 µm, beispielsweise von 1 µm bis 1000 µm, insbesondere von 10 bis 800 µm auf.

In einer weiteren bevorzugten Ausführungsform der Erfindung weist das textile Flächengebilde Mikrofasern, vorzugweise mit einem Titer von weniger als 1 dtex, beispielweise von 0,01 bis 1 dtex, noch bevorzugter von 0,01 bis 0,9 dtex auf. Hieran ist vorteilhaft, dass die Mikrofasern eine besonders hohe Kapillarität und hierdurch eine besonders gute Verteilung von Flüssigkeiten ermöglichen. Darüber hinaus erlauben Mikrofasern auf Grund ihrer Feinheit eine besonders kleine Porengröße und damit eine besonders geringe Durchlässigkeit für durch die superabsorbierenden Partikel freigesetzten Staub.

In einer weiteren bevorzugten Ausführungsform der Erfindung weist das Absorbermaterial eine Flüssigkeitsaufnahmekapazität (VE-Wasser) von mindestens 2 l/m², beispielsweise von 2 l/m² bis 300 l/m², noch bevorzugter von 3 l/m² bis 300 l/m², noch bevorzugter von 5 l/m² bis 300 l/m², noch bevorzugter von 10 l/m² bis 300 l/m² und insbesondere von 20 l/m² bis 300 l/m² auf.

Das textile Flächengebilde enthält vorzugsweise thermoplastische Polymere, insbesondere mit einem Schmelzpunkt von unter 270°C. Besonders bevorzugte Polymere sind Polyester, Copolyester, Polyamide, Copolyamide, Polyolefine und/oder Blends hiervon. Hieran ist vorteilhaft, dass diese zum thermischen Verschweißen verwendet werden können. Ebenfalls denkbar ist aber auch die Verwendung von nicht thermoplastischen Polymeren. Derartige textile Flächengebilde können bei Bedarf miteinander verklebt werden.

In einer weiteren bevorzugten Ausführungsform ist das Absorbermaterial komprimierbar. Hierdurch kann es gut in aktiv und/oder passiv gekühlten stromführenden Systemen, insbesondere in aktiv und/oder passiv gekühlten Stromspeichersystemen, fixiert werden. Außerdem kann so ein guter Kontakt zu angrenzenden Bauteilen sicher gestellt werden. Die Stauchhärte des Absorbermaterials, gemessen nach DIN EN ISO 3386 -1:2015-10, beträgt bei 40% Stauchung vorzugsweise mindestens 0,05 kPa, beispielsweise 0,05 bis 50 kPa, bevorzugt 0,05 bis 25 kPa und besonders bevorzugt 0,1 bis 10 kPa.

In einer weiteren bevorzugten Ausführungsform weist die Hülle mindestens zwei verschiedene flächig aufeinander angeordnete textile Flächengebilde auf. Dabei unterscheiden sich die textilen Flächengebilde vorzugsweise in den Polymermaterialien aus denen sie aufgebaut sind. Alternativ oder zusätzlich können sich die textilen Flächengebilde in der Art ihrer Herstellung, Dicke, Höchstzugkraft, Höchstzugkraft-Dehnung, Modul, Gewicht, Luftdurchlässigkeit und/oder Porosität unterscheiden. Denkbar ist mithin dass die Hülle zwei oder mehr verschiedene textile Flächengebilde aufweist, die sich beispielsweise in einer oder mehreren der vorgenannten Eigenschaften unterscheiden. Die verschiedenen textilen Flächengebilde können zur Ausbildung der Taschen, wie oben erläutert, auf verschiedene Arten miteinander verbunden sein, z.B. thermisch miteinander verschweißt und/oder miteinander verklebt und/oder miteinander vernäht.

In einer weiteren bevorzugten Ausführungsform weist das Absorbermaterial auf mindestens einer Seite der Hülle eine selbstklebende Lage auf. Dabei ist unter selbstklebend zu verstehen, dass die selbstklebende Lage es ermöglicht das Absorbermaterial auf verschiedenen festen Oberflächen zu fixieren. Dabei kann die selbstklebende Lage die Hülle vollflächig oder nur partiell bedecken. Die selbstklebende Lage kann beispielweise ein doppelseitiges Klebeband sein.

An der Verwendung von superabsorbierenden Partikeln ist vorteilhaft, dass diese in der Regel schlecht brennen, und hierdurch die Flammbeständigkeit des Absorbermaterials erhöhen. Wenn eine noch weiter gesteigerte Flammbeständigkeit gewünscht ist, kann das Absorbermaterial mit Flammschutzadditiven und/oder nicht brennbaren Fasern wie beispielsweise Glasfasern oder Aramidfasern ausgestattet werden. Hierdurch kann das Absorbermaterial eine Flammbeständigkeit gemäß UL 94 HB erzielen.

In einer weiteren Ausführungsform liegt das Absorbermaterial als Absorberpad vor. Unter einem Absorberpad wird ein zugeschnittenes und an den Rändern verschweißtes Absorbermaterial verstanden. Ein weiterer Gegenstand der vorliegenden Erfindung umfasst ein Absorberpad, das ein Absorbermaterial, gemäß einer oder mehrerer der beschriebenen Ausführungsformen enthält. Das Absorberpad kann die verschiedensten symmetrischen und/oder unsymmetrischen geometrischen Formen haben.

Üblicherweise weist das Absorberpad zwei verschiedene Arten von Nähten auf, nämlich die umrandenden Nähte und die innenliegenden Nähte. Unter einer innenliegenden Naht ist eine Naht zu verstehen, die auf jeder Seite mindestens eine Tasche begrenzt. Vorzugsweise kreuzen sich mindestens zwei, noch bevorzugter mindestens 80% der innenliegenden Nähte.

In einer weiteren bevorzugten Ausführungsform sind die außenliegenden Nähte durchgehend und die innenliegenden Nähte diskontinuierlich. Hierdurch können die vorteilhaften Eigenschaften beider Nahttypen miteinander kombiniert werden.

Ein weiterer Gegenstand der Erfindung ist ein aktiv und/oder passiv gekühltes stromführendes System, insbesondere ein Stromspeichersystem, umfassend ein Absorbermaterial, umfassend eine Hülle und in dieser angeordnete superabsorbierende Partikel zur Aufnahme und Verteilung von Flüssigkeiten in einem
stromführenden System, wobei die Hülle aus mindestens zwei flächig aufeinander angeordneten Lagen gebildet ist, wobei die Lagen bereichsweise derart miteinander verbunden sind, dass sich eine Segmentierung der Hülle in Form von durch Nähte voneinander abgegrenzten Taschen ergibt und wobei zumindest ein Teil der Taschen die superabsorbierenden Partikel aufweist.

Bevorzugte stromführende Systeme sind stromführende Systeme, ausgewählt aus einem Stromspeichersystem, einem stromführenden Energiewandler, einem Transformator, einem Leistungselektroniksystem, einem Steuerungselektroniksystem, insbesondere einem Prozessor gesteuertem System, einer Ladestation, einem Wechselrichter, einem Gleichrichter, einem Elektrolyseur und/oder Kombinationen hiervon.

In einer bevorzugten Ausführungsform ist das stromführende System ein Batteriesystem, das ein Batteriegehäuse umfasst. Das Batteriegehäuse beinhaltet vorzugsweise Batteriezellen. Die Batteriezellen sind vorzugsweise wärmeleitend mit einem Kühlsystem verbunden. In der Wand des Batteriegehäuses ist vorzugsweise ein Druckausgleichselement zum Druckausgleich zwischen Innenraum und Außenbereich des Batteriegehäuses vorgesehen. Das Absorberpad ist vorzugsweise unterhalb des Kühlsystems angeordnet. Hierdurch kann die austretende Kühlflüssigkeit oder das sich ausscheidende Kondensat besonders effizient aufgenommen werden. Bevorzugt ist das Absorberpad mithin im Bodenbereich des stromführenden Systems, das heißt zwischen Kühlsystem und Boden des Batteriegehäuses angeordnet. Zusätzlich oder alternativ kann das Absorberpad im Seitenbereich des stromführenden Systems, das heißt zwischen Kühlsystem und Seitenwänden des Batteriegehäuses angeordnet sein.

### Kurzbeschreibung der Figuren:

- Figur 1:: Schematische Darstellung eines erfindungsgemäßen Absorbermaterials 1 im Querschnitt
- Figur 2:: Schematische Darstellung eines erfindungsgemäßen Absorbermaterials in Aufsicht
- Figur 3:: Schematische Darstellung eines erfindungsgemäßen Stromspeichersystems 11
- Figur 4:: Schematische Darstellung eines nicht erfindungsgemäßen Stromspeichersystems 11
- Figur 5:: Schematische Darstellung eines erfindungsgemäßen Stromspeichersystems 11
- Figur 6:: Schematische Darstellung einer Messapparatur 15 zur Bestimmung der Absorptionskinetik
- Figur 7:: Schematische Darstellung verschiedener Ausführungsformen der Naht 5
- Figur 8:: Schematische Darstellung des Querschnitts einer Naht 5 zwischen zwei Taschen 4
- Figur 9:: Schematische Darstellung verschiedener Taschengeometrien
- Figur 10:: Messergebnisse für die Absorptionskinetik verschiedener erfindungsgemäßer Absorptionspads

### Figurenbescheibung:

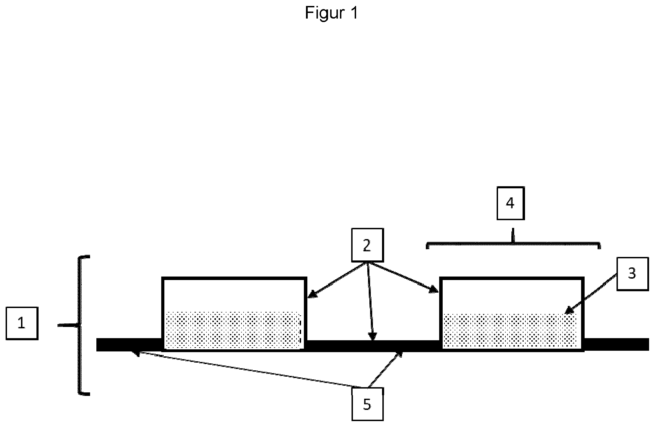

Figur 1 zeigt ein erfindungsgemäßes Absorbermaterial 1 im Querschnitt, umfassend eine Hülle 2 und in dieser angeordnete superabsorbierende Partikel 3. Die Hülle 2 umfasst zwei flächig aufeinander angeordnete Lagen in Form von textilen Flächengebilden, wobei die Lagen bereichsweise derart miteinander verbunden sind, dass sich eine Segmentierung der Hülle in Form von durch Schweißnähte 5 voneinander abgegrenzte Taschen 4 ergibt. Zumindest ein Teil der Taschen weist die superabsorbierenden Partikel 3 auf.

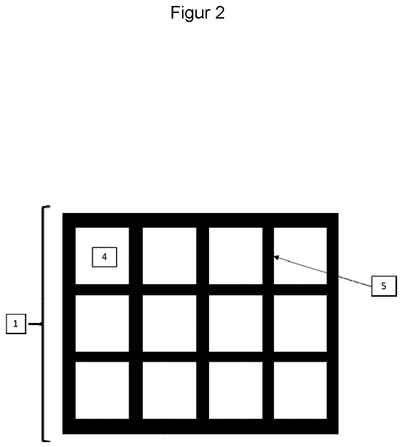

Figur 2 zeigt ein erfindungsgemäßes Absorbermaterial 1 in Aufsicht, unterteilt in zwölf Taschen 4 und Schweißnähte 5.

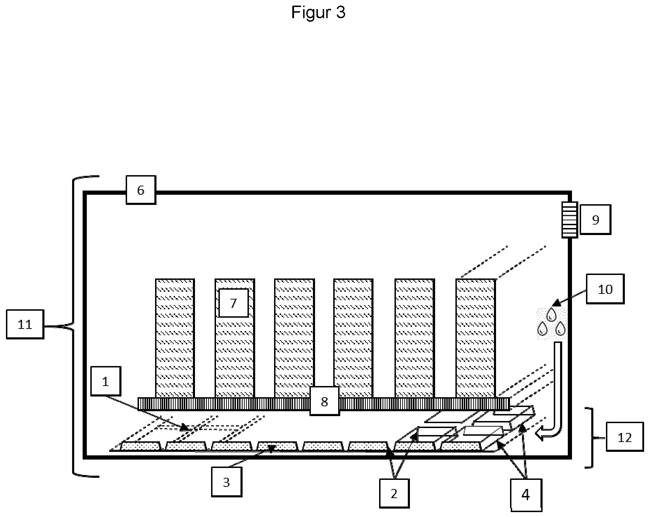

Figur 3 zeigt ein erfindungsgemäßes Stromspeichersystem 11, in Form einer Batterie umfassend ein Batteriegehäuse 6. Das Batteriegehäuse 6 beinhaltet Batteriezellen 7. Die Batteriezellen 7 sind wärmeleitend mit einem Kühlsystem 8 verbunden. In der Wand des Gehäuses ist ein Druckausgleichselement 9 zum Druckausgleich zwischen Innenraum und Außenbereich des Batteriegehäuses 6 vorgesehen. Das Absorbermaterial 1 ist unterhalb des Kühlsystems 8 angeordnet, da hierdurch austretende Kühlflüssigkeit 10 oder sich ausscheidendes Kondensat 10 aufgenommen werden kann. Das Absorbermaterial 1 ist im Bodenbereich 12 des Stromspeichersystems 11, das heißt zwischen Kühlsystem 8 und Boden des Batteriegehäuses 6 angeordnet. Das Absorbermaterial 1 umfasst eine Hülle 2 und in dieser angeordnete superabsorbierende Partikel 3. Die Hülle 2 umfasst weiterhin ein textiles Flächengebilde und ist in Taschen 4 unterteilt. Das Absorbermaterial 1 ist hier im ungequollenen Zustand dargestellt.

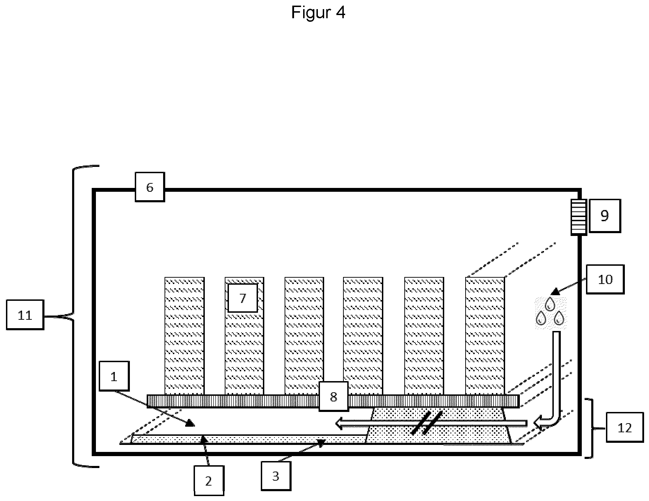

Figur 4 zeigt ein nicht erfindungsgemäßes Stromspeichersystem 11, umfassend ein Batteriegehäuse 6. Das Batteriegehäuse 6 beinhaltet Batteriezellen 7. Die Batteriezellen 7 sind wärmeleitend mit einem Kühlsystem 8 verbunden. In der Wand des Gehäuses ist ein Druckausgleichselement 9 zum Druckausgleich zwischen Innenraum und Außenbereich des Batteriegehäuses 6 vorgesehen. Das Absorbermaterial 1 ist unterhalb des Kühlsystems 8 angeordnet, da hierdurch die austretende Kühlflüssigkeit 10 oder das sich ausscheidende Kondensat 10 aufgenommen werden kann. Das Absorbermaterial 1 ist im Bodenbereich 12 des stromspeichernden Systems 11, das heißt zwischen Kühlsystem 8 und Boden des Batteriegehäuses 6 angeordnet. Das Absorbermaterial 1 umfasst eine Hülle 2 und in dieser angeordnete superabsorbierende Partikel 3. Die Hülle 2 umfasst weiterhin ein textiles Flächengebilde und ist nicht in Taschen unterteilt. Weiterhin gezeigt ist, wie austretende Kühlflüssigkeit 10 oder sich abscheidendes Kondensat 10 seitlich in das Absorbermaterial eindringt und durch das Quellen des Absorbermaterials am weiteren Eindringen gehindert wird.

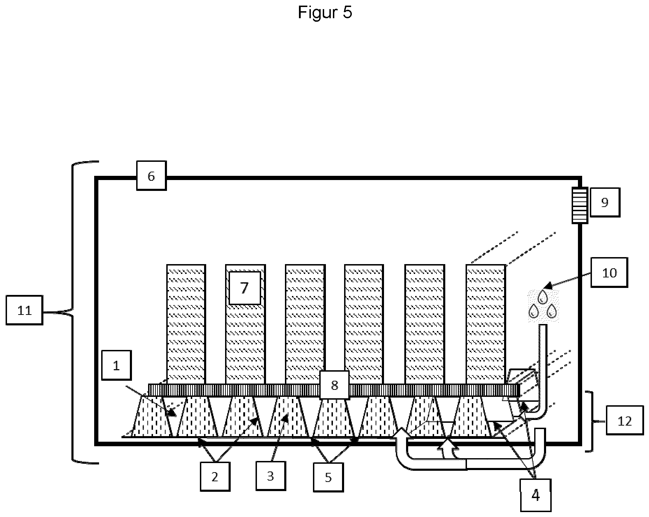

Figur 5 zeigt ein erfindungsgemäßes Stromspeichersystem 11, umfassend ein Batteriegehäuse 6. Das Batteriegehäuse 6 beinhaltet Batteriezellen 7. Die Batteriezellen 7 sind wärmeleitend mit einem Kühlsystem 8 verbunden. In der Wand des Gehäuses ist ein Druckausgleichselement 9 zum Druckausgleich zwischen Innenraum und Außenbereich des Batteriegehäuses 6 vorgesehen. Das Absorbermaterial 1 ist unterhalb des Kühlsystems 8 angeordnet, da hierdurch austretende Kühlflüssigkeit 10 oder sich ausscheidendes Kondensat 10 aufgenommen werden kann. Das Absorbermaterial 1 ist im Bodenbereich 12 des stromspeichernden Systems 11, das heißt zwischen Kühlsystem 8 und Boden des Batteriegehäuses 6 angeordnet. Das Absorbermaterial 1 umfasst eine Hülle 2 und in dieser angeordnete superabsorbierende Partikel 3. Die Hülle 2 umfasst weiterhin ein textiles Flächengebilde und ist in Taschen 4 unterteilt. Weiterhin gezeigt ist wie austretende Kühlflüssigkeit 10 oder sich abscheidendes Kondensat 10 seitlich und von vorne über die Nähte 5 zwischen den Taschen 4 ungehindert in das Absorbermaterial eindringt. Das Absorbermaterial ist hier gequollen dargestellt.

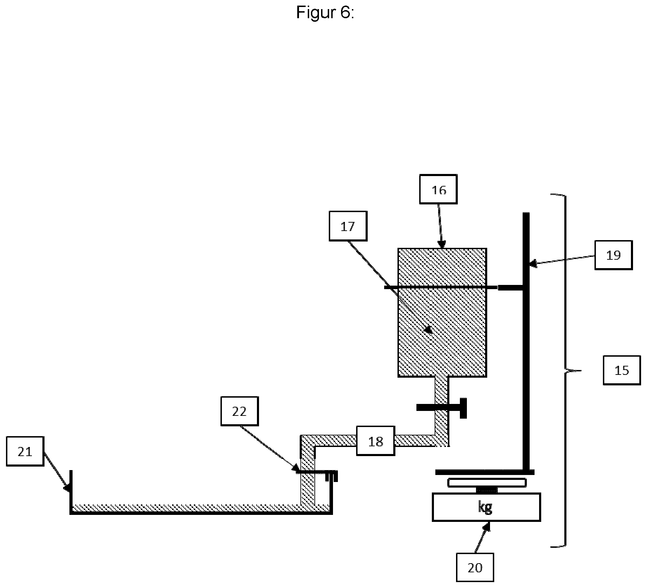

Figur 6 zeigt die Messapparatur 15 zur Bestimmung der Absorptionskinetik. Eine Glasflasche 16 wird mit der Kühlflüssigkeit 17 gefüllt und mit einem Gummischlauch 18(10×2 mm, 50 cm lang) luftdicht versehen. Dabei ist der Gummischlauch 18 mittels einer Klemme verschließbar. Die Glasflasche 16 ist kopfüber an einem Stativ 19 fixiert, wobei das Stativ 19 auf einer Wage 20 steht, um die Gewichtsabnahme während der Kinetikmessung zu protokollieren. Die Öffnung des Gummischlauchs 18 steht auf dem Boden am Rand in einer Instrumentenschale 21 (MF Harz) mit einer Innenfläche von 315 x 210 x 50mm (L x B x H) in der Art, dass die Öffnung des Schlauchs parallel auf dem Boden steht. Der Schlauch ist ohne Deformation mit einer Schlauchschelle 22 am Rand der Instrumentenschale 21 fixiert. Der Abstand zum Boden der Schale kann variiert werden.

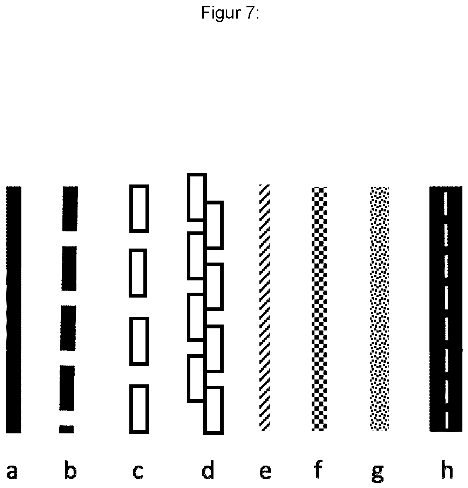

In Figur 7 sind verschiedene Ausführungsformen der Naht 5 dargestellt. Dabei stellt der schwarze Bereich die unmittelbare Nahtfläche dar. Naht a stellt eine kontinuierliche Naht dar, die vollständig aus unmittelbarer Nahtfläche besteht. Die Nähte b bis g sind diskontinuierlich in verschiedenen Ausführungsformen. In der Naht b stellen die schwarzen Rechtecke schematisch die unmittelbaren Nahtflächen dar und der Bereich zwischen den schwarzen Rechtecken die mittelbare Nahtfläche. In der Naht c und d stellen die Umrandungen der Rechtecke schematisch die unmittelbaren Nahtflächen dar und der Bereich zwischen und innerhalb der Rechtecke die mittelbare Nahtfläche. In den Näht e, f, g und h stellen die schwarzen Bereiche schematisch die unmittelbaren Nahtflächen dar und die Bereiche zwischen ihnen die mittelbare Nahtfläche. Die Naht h ist als mittig perforierte Schweißnaht ausgebildet.

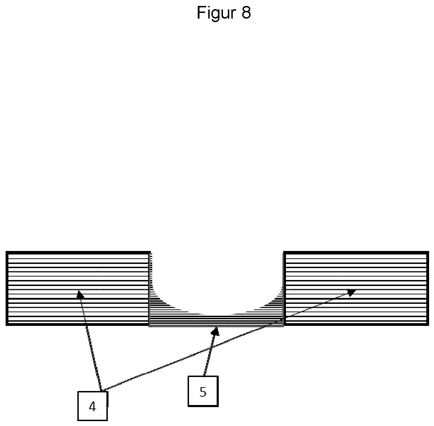

In Figur 8 ist der Querschnitt einer Naht 5 zwischen zwei Taschen 4 dargestellt. Die Naht 5 liegt in Form einer Schweißnaht vor. Links und rechts der Schweißnaht liegen die Taschen 4. Die Dicke der Schweißnaht nimmt in Richtung der Taschen zu. Entsprechend nimmt die Dichte der Schweißnaht in Richtung der Taschen ab. Dieser Übergang ist kontinuierlich. Der Bereich der höchsten Verdichtung liegt in der Mitte der Schweißnaht 5.

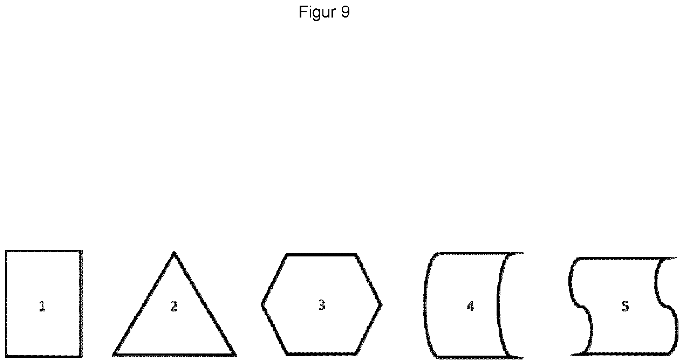

In Figur 9 sind verschiedene Taschengeometrien dargestellt (rechteckig, dreieckig, sechseckig, schuppenförmig, geschwungen).

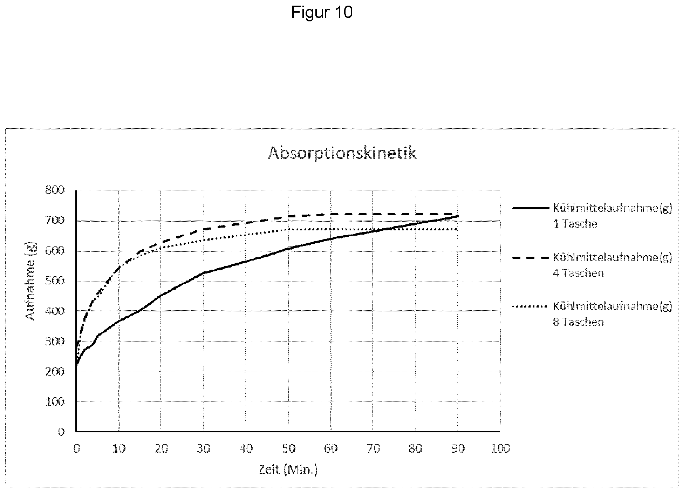

In Figur 10 wird die Absorptionskinetik verschiedener Absorptionspads mit einer unterschiedlichen Kammeranzahl dargestellt. Es zeigt sich, dass die erfindungsgemäßen Absorptionspads mit vier bzw. acht Kammern eine höhere Absorptionsgeschwindigkeit haben als ein System mit lediglich einer Kammer. Dies ist vorteilhaft, weil die auftretende Kühlflüssigkeit schneller absorbiert werden kann.

Im Folgenden wird die Erfindung anhand mehrerer Beispiele näher erläutert:

### Beispiel 1: Herstellung verschiedener Absorbermaterialien

In einem kontinuierlichen Herstellungsprozess werden 2 Hüllstoffe mittels Ultraschall-Schweißverfahren, Ultraschall sowohl in Längs-, als auch in Querrichtung, miteinander verbunden. Die Sonotrode wird bei 30 KHz betrieben und die Hüllstoffe mit einer Geschwindigkeit von 10 m/min verschweißt. Die Geometrie der Schweißnaht ist durchgehend und entspricht Struktur a in Figur 7, Die Breite beträgt 3 mm. Die so entstehenden Taschen werden vor dem finalen Verschließen mit der entsprechenden Menge superabsorbierender Partikel (s. Tabelle) befüllt. Die Befüllung erfolgt über eine automatisierte Dosiervorrichtung, die in die kontinuierliche Fertigungsanlage integriert ist. Die Nähte zur optimierten Verteilung der zu absorbierenden Flüssigkeit, werden in Form und Größe direkt mit den verwendeten Schweißwerkzeugen im Fertigungsprozess selbst erzeugt. Die Konfektionierung der finalen Größe des Absorberpads erfolgt durch Zuschnitt direkt in der Anlage bzw. als verketteter Prozessschritt im direkten Anschluss.

Folgende Absorberpads wurden hergestellt:

**Tabelle 1**

| | Absorberpad I nicht erfindungsgemäß | Absorberpad II erfindungsgemäß | Absorberpad III erfindungsgemäß |
|---|---|---|---|
| Textiles Flächengebilde (zwei Lagen) | 40 g/m² PET/co-PES Vlies, kalandiert | 40 g/m² PET/co-PES Vlies, kalandiert | 40 g/m² PET/co-PES Vlies, kalandiert |
| Absorberpadgröße (mm) | 200 x 290 | 200 x 290 | 200 x 290 |
| Anzahl Taschen | 1 | 4 | 8 |
| Schweißnaht Type (Figur 7) | a | a | a |
| Superabsorber gesamt (g) | 12,5 | 12,5 | 12,5 |
| Schweißnahtbreite (mm) | 3 | 3 | 3 |
| Superabsorber (g / Tasche) | 12,5 | 3,125 | 1,56 |

| Superabsorber Type | Teilneutralisierte Polyacrylsäure | Teilneutralisierte Polyacrylsäure | Teilneutralisierte Polyacrylsäure |
|---|---|---|---|
| Absorptionskapazität (g) 1 Min | 251 | 326 | 320 |
| 5 Min | 319 | 459 | 446 |
| 15 Min | 402 | 598 | 585 |
| 30 Min | 524 | 670 | 635 |
| 60 Min | 639 | 721 | 670 |

Es zeigt sich, dass die erfindungsgemäßen Absorptionspads mit vier bzw. acht Taschen bei gleicher Superabsorbermenge eine höhere Absorptionsgeschwindigkeit haben als ein System mit einer Tasche. Darüber hinaus wurde gefunden, dass die erfindungsgemäßen Absorptionspads eine gute Retention für die Kühlflüssigkeit zeigen und kontrolliert quellen.

### Durchführung Messung Absorptionskinetik:

Die Messapparatur wird gemäß Figur 6 aufgebaut und 200 g der Kühlflüssigkeit 17 in der Instrumentenschale vorgelegt. Der Abstand des Schlauchendes vom Boden der Instrumentenschale wird auf 3 mm so eingestellt, dass bei Absinken des Flüssigkeitspegels Kühlflüssigkeit aus der Flasche nachläuft. Ist das System im Gleichgewicht, sprich läuft keine weitere Kühlflüssigkeit aus der Flasche nach, wird das gefertigte Absorberpad in der Art in die Instrumentenschale gelegt, dass sich die Superabsorberpartikel in einem Eckbereich des Pads befinden. Es wird die Zeit gestoppt und mittels der Waage die Gewichtsabnahme protokolliert. In Tabelle 1 bzw. Figur 10 sind die Werte der Kinetik dargestellt.

## Patentansprüche

1. Verwendung eines Absorbermaterials (1), umfassend eine Hülle und in dieser angeordnete superabsorbierende Partikel (3) zur Aufnahme und/oder Verteilung von Flüssigkeiten in einem aktiv und/oder passiv gekühlten stromführenden System, insbesondere in einem aktiv und/oder passiv gekühlten Stromspeichersystem (11), wobei die Hülle (2) aus mindestens zwei flächig aufeinander angeordneten Lagen gebildet ist, wobei die Lagen bereichsweise derart durch mindestens eine Naht (5) miteinander verbunden sind, dass sich eine Segmentierung der Hülle (2) in Form von voneinander abgegrenzten Taschen (4) ergibt und wobei zumindest ein Teil der Taschen (4) die superabsorbierenden Partikel aufweist.

2. Verwendung nach Anspruch 1, **dadurch gekennzeichnet, dass** die Naht (5) als Schweißnaht, insbesondere als thermisch und/oder ultraschallverschweißte Naht, Klebenaht und/oder vernadelte Naht ausgeführt ist.

3. Verwendung nach Anspruch 1 oder 2, **dadurch gekennzeichnet, dass** das stromführende System ausgewählt ist aus einem Stromspeichersystem (11), insbesondere einem Batteriesystem, einem stromführenden Energiewandler, einem Transformator, einem Leistungselektroniksystem, einem Steuerungselektroniksystem, insbesondere einem Prozessor gesteuertem System, einer Ladestation, einem Wechselrichter, einem Gleichrichter, einem Elektrolyseur und/oder Kombinationen hiervon.

4. Verwendung nach einem oder mehreren der vorangehenden Ansprüche, **dadurch gekennzeichnet, dass** die vom erfindungsgemäßen System aufzunehmenden Flüssigkeiten Kühlflüssigkeiten und/oder Wasser, vorzugsweise Alkohole insbesondere Glycol und/oder Alkohol / Wasser Gemische, insbesondere Glycol / Wasser Gemische sind.

5. Verwendung nach einem oder mehreren der vorangehenden Ansprüche, **dadurch gekennzeichnet, dass** die Naht (5) diskontinuierlich ist.

6. Verwendung nach einem oder mehreren der vorangehenden Ansprüche, **dadurch gekennzeichnet, dass** die Nahtfläche mindestens 0,4 bis 50 Flächen%, noch bevorzugter 2 bis 40 Flächen% und besonders bevorzugt 4 bis 35 Flächen%, jeweils bezogen auf die Gesamtfläche des Absorbermaterials beträgt.

7. Verwendung nach einem oder mehreren der vorangehenden Ansprüche, **dadurch gekennzeichnet, dass** die Naht (5) als Schweißnaht ausgebildet ist, die in ihrer Mitte perforiert ist.

8. Verwendung nach einem oder mehreren der vorangehenden Ansprüche, **dadurch gekennzeichnet, dass** die Naht (5) als Schweißnaht ausgebildet ist, und die Dicke der Schweißnaht in Richtung mindestens einer an die Schweißnaht angrenzenden Tasche, vorzugsweise kontinuierlich, zunimmt.

9. Verwendung nach einem oder mehreren der vorangehenden Ansprüche, **dadurch gekennzeichnet, dass** die Anzahl der Taschen (4) pro m² Absorbermaterial (1) im Bereich von 4 bis 400 Taschen (4) pro Quadratmeter liegt.

10. Verwendung nach einem oder mehreren der vorangehenden Ansprüche, **dadurch gekennzeichnet, dass** die Menge an superabsobierenden Partikeln 20 bis 1000 g/m² bezogen auf die Fläche des Absorbermaterials beträgt.

11. Verwendung nach einem oder mehreren der vorangehenden Ansprüche, **dadurch gekennzeichnet, dass** die Menge an superabsobierenden Partikeln pro Tasche 0,5 g bis 500 g beträgt.

12. Verwendung nach einem oder mehreren der vorangehenden Ansprüche, **dadurch gekennzeichnet, dass** mindestens eine Tasche zusätzlich zu den superabsorbierenden Partikeln ein Füllmaterial, beispielsweise saugfähige Materialien wie Zellstoffpulp, Fasern, Guar, Kieselgel und/oder Schaum, insbesondere in einer Menge von 5 bis 90 Gew.%, aufweist.

13. Verwendung nach einem oder mehreren der vorangehenden Ansprüche, **dadurch gekennzeichnet, dass** die mindestens eine Lage der Hülle (2) ein textiles Flächengebilde aufweist, insbesondere einen Vliesstoff, ein Gewebe, ein Gewirke und/oder einen offenporigen Schaum.

14. Verwendung nach einem oder mehreren der vorangehenden Ansprüche, **dadurch gekennzeichnet, dass** die mittlere Porengröße des textilen Flächengebildes, gemessen nach ASTM E 1294-89 1 bis 1000 µm beträgt.

15. Verwendung nach einem oder mehreren der vorangehenden Ansprüche, **dadurch gekennzeichnet, dass** das Absorbermaterial (1) eine Flüssigkeitsaufnahmekapazität (VE-Wasser) von 2 l/m² bis 300 l/m² aufweist.

16. Verwendung nach einem oder mehreren der vorangehenden Ansprüche, **dadurch gekennzeichnet, dass** das Absorbermaterial (1) als Absorberpad vorliegt.

17. Aktiv und/oder passiv gekühltes stromführendes System, insbesondere Stromspeichersystem (11), umfassend ein Absorbermaterial (1), umfassend eine Hülle (2) und in dieser angeordnete superabsorbierende Partikel (3) zur Aufnahme und Verteilung von Flüssigkeiten in dem stromführenden System, wobei die Hülle (2) aus mindestens zwei flächig aufeinander angeordneten Lagen gebildet ist, wobei die Lagen bereichsweise derart miteinander verbunden sind, dass sich eine Segmentierung der Hülle (2) in Form von durch Nähte voneinander abgegrenzter Taschen (4) ergibt und wobei zumindest ein Teil der Taschen (4) die superabsorbierenden Partikel aufweist.
